(19) **Europäisches Patentamt**
**European Patent Office**
**Office européen des brevets**

(11) **EP 4 685 735 A1**

(12) **EUROPEAN PATENT APPLICATION**

(43) Date of publication:
**28.01.2026 Bulletin 2026/05**

(51) International Patent Classification (IPC):
***G06T 7/00*** *(2017.01)*

(21) Application number: **24190036.4**

(22) Date of filing: **22.07.2024**

(52) Cooperative Patent Classification (CPC):
**G06T 7/0012;** G06T 2207/20081;
G06T 2207/20084; G06T 2207/30016;
G06T 2207/30096

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventors:
• EWALD, Arne
Eindhoven (NL)

• FLÄSCHNER, Nick
Eindhoven (NL)
• SCHMIDT-RICHBERG, Alexander
5656AG Eindhoven (NL)
• BROSCH, Tom
Eindhoven (NL)
• CAROLUS, Heike
Eindhoven (NL)
• GESSERT, Nils Thorben
Eindhoven (NL)

(74) Representative: **Philips Intellectual Property &
Standards**
**High Tech Campus 52**
**5656 AG Eindhoven (NL)**

(54) **ENHANCED INTERPRETABILITY OF AI RESULTS IN MEDICAL IMAGING BY SUPERVISION,
AND ASSOCIATED DEVICES, SYTEMS, AND METHODS**

(57)     An explainable medical image classification system receives a medical image. The system generates, by a trained predictive network, a classification representative of a patient physiology in the medical image. The system generates a saliency map based on the medical image and the trained predictive network. The system compares features of the saliency map to a pre-determined shape constraint. The system outputs the saliency map, the medical image, and the classification, when the features of the saliency map satisfy the pre-determined shape constraint. The system prevents output of the saliency map when the saliency map does not satisfy the pre-determined shape constraint.

FIG. 1

**Description**

FIELD OF THE INVENTION

The subject matter described herein relates to improvements in medical image classification. For example, a predictive network analyzes a medical image of a patient to generate a classification, e.g., presence of cancerous tissue, and a map identifying regions of relevance for the classification.

BACKGROUND OF THE INVENTION

Many neural network-based models and tools are available for medical image classification. The classifications may indicate the presence of particular diseases or tissues within a provided medical image. While some models and tools are very accurate, it isn't always apparent why or how the model arrived at the classification. For example, in many systems, after a neural network model is trained, a user provides a medical image as input and receives a classification, e.g., a "yes"/"no," in response to the task for which the model was trained, e.g., detection of cancerous tissue. Beyond the output classification, the user, such as a clinician or medical professional, does not know on what basis the model made the predictions. In other words, the model does not provide an explanation of the result. Thus, the value of classification to a clinician or medical profession is reduced. However, even with models that provide some explanation, the quality of the explanation is poor.

SUMMARY OF THE INVENTION

Disclosed is an explainable medical image classification system. A medical image is received, which may be selected, provided, or taken by a user, e.g., a medical professional. One or more classifications are generated by a predictive network, such as a neural network, from the medical image. A saliency map may also be generated, identifying the features important to the predictive network for the generated classification. The results may be displayed to the user depending on the classification and/or the saliency map satisfying certain display conditions that ensure the quality and accuracy of the results. For example, a predicted classification may not be shown if it indicates an equal likelihood of a medical image including cancerous tissue or not including cancerous tissue. Said another way, the classification may not be shown if it reflects a low confidence score. As another example, a saliency map may not be shown when the features in the map do not match shape features which are imposed as constraints or conditions for the given classification task. For example, identifying bone fractures would tend to show more elongate image features while tumors would tend to show more circular features. Furthermore, the explainable medical image classification tool is trained both for predicting a correct classification and for generating a correct explanation, i.e. an accurate saliency map. Training can include two or more loss functions, where at least one is based on classifications and at least one is based on saliency maps. Using the losses, comparisons are made between predicted classification and ground truth classifications, as well as predicted saliency maps and ground truth annotations.

This explainable medical image classification system disclosed herein has particular, but not exclusive, utility for classifying medical images and providing accurate explanations for the classification. The explainable medical image classification system receives a medical image and automatically evaluates the accuracy and quality of the classification to determine if the result is provided to the user. Furthermore, the explainable medical image classification system is trained to produce both accurate classification and accurate explanations for the classification. This improves the quality of medical image classifications provided to a user and their ability to judge the explanation for the classification, increasing trust in medical image classification systems and thus improving the speed and quality of patient diagnosis and treatment.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In one general aspect, the present disclosure is directed to a computer-implemented method. The computer-implemented method also includes receiving a medical image; generating, by a trained predictive network, a classification representative of a patient physiology in the medical image. The computer-implemented method also includes generating a saliency map based on the medical image and the trained predictive network, where the saliency map may include a plurality of pixels, where values of the plurality of pixels are indicative of a region of the medical image contributing to the classification; comparing features of the saliency map to a pre-determined shape constraint. The computer-implemented method also includes when the features of the saliency map satisfy the pre-determined shape constraint, outputting the saliency map, the medical image, and the classification to a display. The computer-implemented method also includes when the features of the saliency map do not satisfy the pre-determined shape constraint, preventing the saliency map from being output to the display.

In some aspects, implementations may include one or more of the following features. The method where generating the saliency map further may include applying a threshold to the plurality of pixels, thereby resulting in a binary saliency map. The features of the saliency map may include shape features determined from the binary saliency map. The shape features may include a plurality of shape vectors determined using principal component analysis. The shape features may include one or more connected components. The training the predictive network may include: receiving a training image, a ground truth classification, and a ground truth annotation; generating, by the predictive network, a predicted classification representative of a patient physiology in the training image; generating a training saliency map based on the training image and the predictive network; computing a total loss based on a first loss and a second loss; and updating the predictive network based on the total loss, where the first loss is based on a comparison of the predicted classification and the ground truth classification, and where the second loss is based on a comparison of the training saliency map and the ground truth annotation. The ground truth annotation may include a pixel-wise ground truth annotation, a bounding box, target connected component count, or a target shape feature.

In one general aspect, the present disclosure is directed to a system a processor circuit configured to: receive a medical image; generate, by a trained predictive network, a classification representative of a patient physiology in the medical image; generate a saliency map based on the medical image and the trained predictive network, where the saliency map may include a plurality of pixels, where values of the plurality of pixels are indicative of a region of the medical image contributing to the classification; compare features of the saliency map to a pre-determined shape constraint; and when the features of the saliency map satisfy the pre-determined shape constraint, output the saliency map, the medical image, and the classification to a display, and when the features of the saliency map do not satisfy the pre-determined shape constraint, prevent the saliency map from being output to the display.

In some aspects, implementations may include one or more of the following features. The system where the processor circuit configured to generate the saliency map is further configured to apply a threshold to the plurality of pixels, thereby resulting in a binary saliency map. The features of the saliency map may include shape features determined from the binary saliency map. The shape features may include a plurality of shape vectors determined using principal component analysis. The shape features may include one or more connected components. The processor circuit is further configured to train a predictive network, thereby resulting in the trained predictive network, where to train the predicted network the processor is further configured to: receive a training image, a ground truth classification, and a ground truth annotation; generate, by the predictive network, a predicted classification representative of a patient physiology in the training image; generate a training saliency map based on the training image and the predictive network; compute a total loss based on a first loss and a second loss; and update the predictive network based on the total loss, where the first loss is based on a comparison of the predicted classification and the ground truth classification, and where the second loss is based on a comparison of the training saliency map and the ground truth annotation. The ground truth annotation may include a pixel-wise ground truth annotation, a bounding box, target connected component count, or a target shape feature.

In one general aspect, the present disclosure is directed to a non-transitory machine-readable medium that may include a plurality of machine-executable instructions which. The non-transitory machine-readable medium also includes receiving a medical image; generating, by a trained predictive network, a classification representative of a patient physiology in the medical image. The non-transitory machine-readable medium also includes generating a saliency map based on the medical image and the trained predictive network, where the saliency map may include a plurality of pixels, where values of the plurality of pixels are indicative of a region of the medical image contributing to the classification; comparing features of the saliency map to a pre-determined shape constraint. The non-transitory machine-readable medium also includes when the features of the saliency map satisfy the pre-determined shape constraint, outputting the saliency map, the medical image, and the classification to a display. The non-transitory machine-readable medium also includes when the features of the saliency map do not satisfy the pre-determined shape constraint, preventing the saliency map from being output to the display.

In some aspects, implementations may include one or more of the following features. The non-transitory machine-readable medium where generating the saliency map further may include applying a threshold to the plurality of pixels, thereby resulting in a binary saliency map. The features of the saliency map may include shape features determined from the binary saliency map. The shape features may include a plurality of shape vectors determined using principal component analysis. The shape features may include one or more connected components. The one or more processors are further caused to perform operations that may include: training a predictive network, thereby resulting in the trained predictive network, where the training the predictive network that may include: receiving a training image, a ground truth classification, and a ground truth annotation; generating, by the predictive network, a predicted classification representative of a patient physiology in the training image; generating a training saliency map based on the training image and the predictive network; computing a total loss based on a first loss and a second loss; and updating the predictive network based on the total loss, where the first loss is based on a comparison of the predicted classification and the ground truth classification, and where the second loss is based on a comparison of the training saliency map and the ground truth annotation.

BRIEF DESCRIPTION OF THE DRAWINGS

Illustrative aspects of the present disclosure will be described with reference to the accompanying drawings, of which:

Fig. 1 is a schematic diagram of a networked system for explainable medical image classification, according to aspects of the present disclosure.

Fig. 2 is a schematic diagram of a processor circuit, according to aspects of the present disclosure.

Fig. 3 is a schematic diagram of a deep learning network configuration, according to aspects of the present disclosure.

Fig. 4 is a schematic diagram of at least a portion of a training system for a predictive network, according to aspects of the present disclosure.

Fig. 5 is a schematic sequence diagram of a process for a training system for training predictive network, according to aspects of the present disclosure.

Fig. 6 is a schematic diagram of at least a portion of an explainable medical image classification system, according to aspects of the present disclosure.

Fig. 7 is a schematic sequence diagram of a process for a system for explainable medical image classification, according to aspects of the present disclosure.

Fig. 8 is a schematic diagram of training data in a training dataset, according to aspects of the present disclosure.

Fig. 9 is an example of training data in the training dataset, according to aspects of the present disclosure.

Fig. 10 is a schematic diagram of saliency map processing, according to aspects of the present disclosure.

Fig. 11 is a schematic diagram of a direct comparison of the pixel intensities, according to aspects of the present disclosure.

Fig. 12 is a schematic diagram of a comparison of the shape features from a principal component analysis, according to aspects of the present disclosure.

Fig. 13 is a schematic diagram of a comparison based on the number of connected components, according to aspects of the present disclosure.

Fig. 14 is a schematic flow diagram of a method for training a predictive network in an explainable medical image classification system, according to aspects of the present disclosure.

Fig. 15 is a schematic flow diagram of a method for explainable medical image classification, according to aspects of the present disclosure.

Fig. 16 is a screen display 1600 including results generated by the explainable medical imaging system, according to aspects of the present disclosure.

DETAILED DESCRIPTION OF EMBODIMENTS

In accordance with at least one aspect of the present disclosure, an explainable medical image classification system is provided that provides a classification associated with a task, e.g., detecting cancerous tissue, while also providing an explanation of the classification, e.g., by generating a saliency map. The saliency map may indicate which areas or pixels in the image contributed to the classification. This allows medical professionals to be more confident in the resulting classification and also to be further informed of areas of the anatomy that are potentially diseased. Furthermore, the system provides a way of training the classification model to improve the accuracy of explanations. For example, training may be done concurrently for generating classifications and their associated explanations, e.g., saliency maps.

These descriptions are provided for exemplary purposes only, and should not be considered to limit the scope of the intervention planning system. Certain features may be added, removed, or modified without departing from the spirit of the claimed subject matter.

For the purposes of promoting an understanding of the principles of the present disclosure, reference will now be made to the aspects illustrated in the drawings, and specific language will be used to describe the same. It is nevertheless understood that no limitation to the scope of the disclosure is intended. Any alterations and further modifications to the described devices, systems, and methods, and any further application of the principles of the present disclosure are fully contemplated and included within the present disclosure as would normally occur to one skilled in the art to which the disclosure relates. In particular, it is fully contemplated that the features, components, and/or steps described with respect to one aspect may be combined with the features, components, and/or steps described with respect to other aspects of the present disclosure. For the sake of brevity, however, the numerous iterations of these combinations will not be described separately. As used herein, accessing can include querying, retrieving, sorting, etc.

The systems and methods disclosed herein provide a number of benefits. For clinicians and medical professionals to accept and trust the results of classification with neural network-based models, they need to understand what features informed the models classification. Thus, the systems and methods disclosed herein improve the accuracy of classification by including sample-based location information of the underlying pathology and/or general shape information about the underlying structure of interest in a medical image in the training of the explainable medical image classification model.

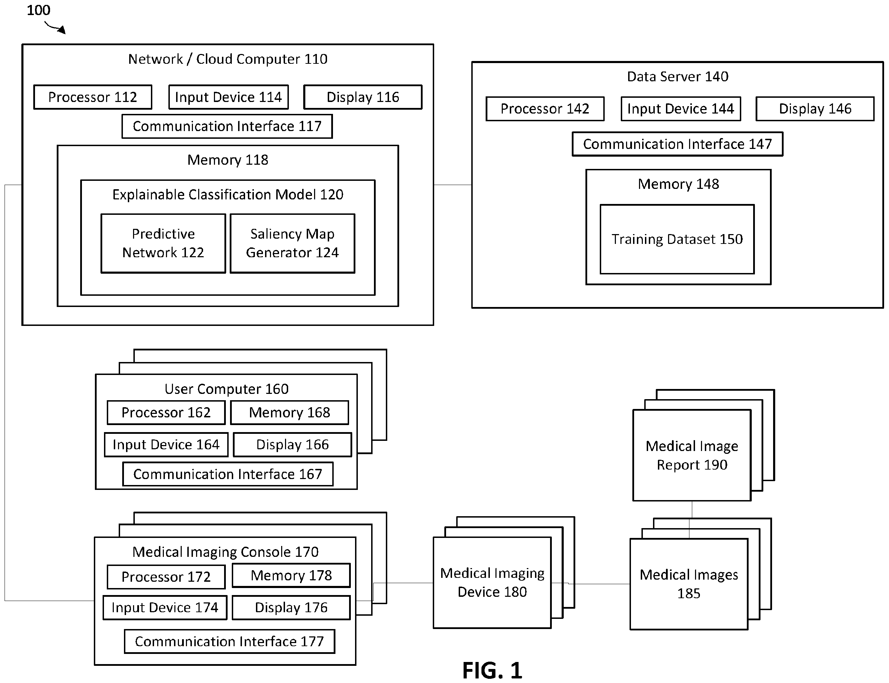

Fig. 1 is a schematic diagram of a networked system 100 for explainable medical image classification, according to aspects of the present disclosure. Networked system 100 may for example may be used to receive a medical image from a user. The medical image may be transmitted to different components of the network system 100 to facilitate explainable medical image classification. The networked system 100 may provide a user with a classification based on the received medical image. For example, in a cancer detection task, the network system 100 may provide a user a "yes" or "no" classification indicating if there is or is not cancerous tissue present in the provided medical image.

The networked system 100 is used for generating task-related classifications and associated explanations for those classifications. The networked system 100 may include a network/cloud computers 110, data server 140, user computers 160, medical imaging console 170, and medical imaging device 180. The network/cloud computers 110 and data server 140 may be in communication with each, each sending and/or receiving data and information from the other, including training data. User computer 160 is depicted in Fig. 1 as in communication with network/cloud computer 110. However, in some instances, user computer 160 may be in communication with either or both of network/cloud computers 110 and data server 140. User computer 160 may be in communication with a medical imaging console 170 which is in communication with a medical imaging device 180. As described herein, communication between the different components may be accomplished by any number of connections, e.g., wired and/or wireless.

Network/cloud computer 110 may include a processor 112, input device 114, display 116, communication interface 117, and memory 118.

Processor 112 may include a central processing unit (CPU), a digital signal processor (DSP), an application specific integrated circuit (ASIC), a controller, a field programmable gate array (FPGA) device, another hardware device, a firmware device, or any combination thereof configured to perform the operations described herein. Processor 112 may also be implemented as a combination of computing devices, e.g., a combination of a DSP and a microprocessor, a plurality of microprocessors, one or more microprocessors in conjunction with a DSP core, or any other such configuration. Processor 112 is configured to process the instructions stored in memory 118. The processor 112 is connected to the communication interface 117.

Input device 114 allows a user to make selections or provide instructions to the network/cloud computer 110. The input device, may be a mouse, touch screen, touch pad etc.

Display 116 is coupled to processor 112. Display 116 may be a monitor or any suitable display. The display 116 is configured to display output of explainable classification model 120, predictive network 122, saliency map generator 124, network performance, data sent from other components of the networked system 100, or any other system diagnostic information.

The communication interface 117 is coupled to the processor 112. Communication interface 117 may include one or more transmitters, one or more receivers, one or more transceivers, and/or circuitry for transmitting and/or receiving communication signals. The communication interface 117 can include hardware components and/or software components implementing a particular communication protocol suitable for transporting signals to other devices in the networked system 100. The communication interface 117 can be referred to as a communication device or a communication interface module.

Memory 118 is coupled to processor 112. The memory 118 may be any suitable storage device, such as a cache memory (e.g., a cache memory of the processor 112), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, solid state drives, other forms of volatile and non-volatile memory, or a combination of different types of memory.

The memory 118 can be configured to store medical images subject information, measurements, data, or files relating to a subject's medical history, history of procedures performed, anatomical or biological features, characteristics, or medical conditions associated with a subject, computer readable instructions, such as code, software, or other application, as well as any other suitable information or data. Subject information may include measurements, data, files, other forms of medical history, such as but not limited to ultrasound images, ultrasound videos, and/or any imaging information relating to the subject's anatomy. The subject information may include parameters related to an imaging procedure such as an anatomical scan window, a probe orientation, and/or the subject position during an imaging procedure. The memory 118 can also be configured to store information related to the training and implementation of machine learning algorithms (e.g., neural networks) and/or information related to implementing image recognition algorithms for detecting/segmenting anatomy, image quantification algorithms, and/or image acquisition guidance algorithms, including those described herein.

In some instances, memory 118 includes data and stored instructions for modules, including explainable classification model 120 and any submodules therein. Explainable classification model 120 may utilize predictive network 122 and saliency map generator 124 to generate classifications and saliency maps from medical images.

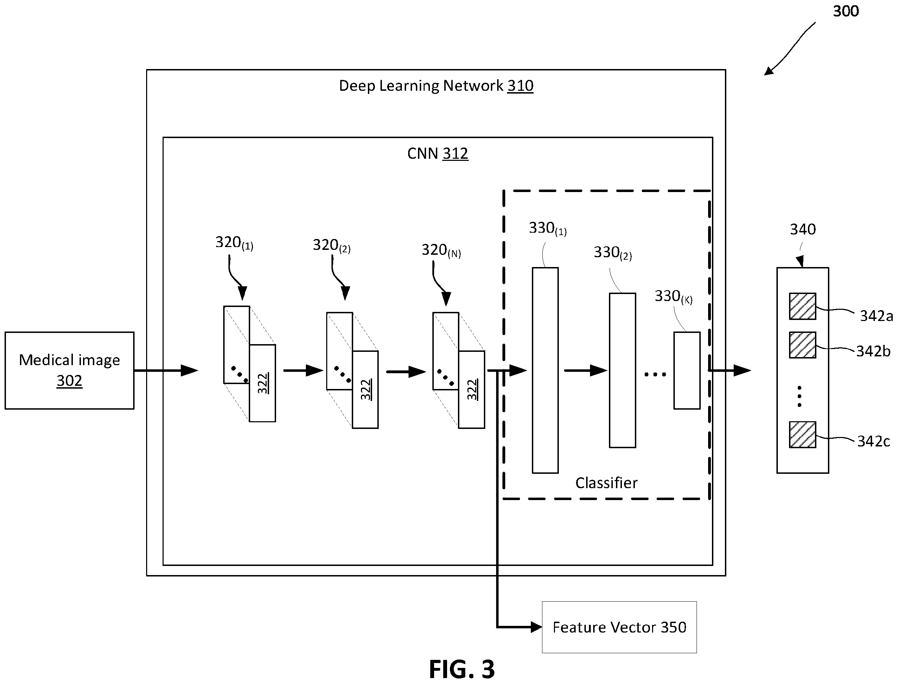

The predictive network 122 and saliency map generator 124 may be any neural network-based model or rule-based programming model, e.g., as described with respect to and as depicted in Fig. 3. For example, predictive network 122 and saliency map generator 124 can be Convolutional Neural Networks (CNN), decision tree models, support vector machines (SVM), generative image-to-image transformers, generative image-to-text transformers (GIT), or other transformer-based models.

Data server 140 may include a processor 142, input device 144, display 146, communication interface 147, and memory 148.

Processor 142 may include a central processing unit (CPU), a digital signal processor (DSP), an application specific integrated circuit (ASIC), a controller, a field programmable gate array (FPGA) device, another hardware device, a firmware device, or any combination thereof configured to perform the operations described herein. The processor 142 may also be implemented as a combination of computing devices, e.g., a combination of a DSP and a microprocessor, a plurality of microprocessors, one or more microprocessors in conjunction with a DSP core, or any other such configuration. The processor 142 is configured to process the instructions stored in memory 148. The processor 142 is connected to the communication interface 147.

Input device 144 allows a user to make selections or provide instructions to the data server 140. The input device may be a mouse, touch-screen, touch pad, etc.

Display 146 is coupled to the processor 142. Display 146 may be a monitor or any suitable display. Display 146 is configured to display training data from training dataset 150, data from other components of the networked system 100, network performance, or any other system diagnostic information.

The communication interface 147 is coupled to the processor 142. The communication interface 147 may include one or more transmitters, one or more receivers, one or more transceivers, and/or circuitry for transmitting and/or receiving communication signals. The communication interface 147 can include hardware components and/or software components implementing a particular communication protocol suitable for transporting signals to other devices in the networked system 100. The communication interface 147 can be referred to as a communication device or a communication interface module.

The memory 148 is coupled to the processor 142. The memory 148 may be any suitable storage device, such as a cache memory (e.g., a cache memory of the processor 142), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, solid state drives, other forms of volatile and non-volatile memory, or a combination of different types of memory.

The memory 148 can be configured to store medical images, subject information, measurements, data, or files relating to a subject's medical history, history of procedures performed, anatomical or biological features, characteristics, or medical conditions associated with a subject, computer readable instructions, such as code, software, or other application, as well as any other suitable information or data. Subject information may include measurements, data, files, other forms of medical history, such as but not limited to ultrasound images, ultrasound videos, and/or any imaging information relating to the subject's anatomy. The subject information may include parameters related to an imaging procedure such as an anatomical scan window, a probe orientation, and/or the subject position during an imaging procedure. The memory 148 can also be configured to store information related to the training and implementation of machine learning algorithms (e.g., neural networks) and/or information related to implementing image recognition algorithms for detecting anatomy, segmenting anatomy (e.g., defining contours of the anatomy), image quantification algorithms, and/or image acquisition guidance algorithms, including those described herein.

In some instances, memory 148 includes data for a training dataset 150. As depicted in Fig. 1, the predictive network 122 and the saliency map generator 124 are located on a separate network/cloud computer from the training dataset 150. During training, data from training dataset 150 may be sent to the network/cloud computer 110. In some instances, training data may be stored in memory 148.

User computer 160 may include a processor 162, input device 164, display 166, communication interface 167, and memory 168.

Processor 162 may include a central processing unit (CPU), a digital signal processor (DSP), an application specific integrated circuit (ASIC), a controller, a field programmable gate array (FPGA) device, another hardware device, a firmware device, or any combination thereof configured to perform the operations described herein. The processor 162 may also be implemented as a combination of computing devices, e.g., a combination of a DSP and a microprocessor, a plurality of microprocessors, one or more microprocessors in conjunction with a DSP core, or any other such configuration. The processor 162 is configured to process the instructions stored in memory 168. The processor 162 is connected to the communication interface 167.

Input device 164 allows a user to make selections or provide instructions to the user computer 160. The input device may be a mouse, touch-screen, touch pad, etc.

Display 166 is coupled to processor 162. Display 166 may be a monitor or any suitable display. Display 166 is configured to display classifications and results from the explainable classification model 120 as described herein. Furthermore, display 166 may be configured to display the images from the data generated by medical imaging device 180.

The communication interface 167 is coupled to the processor 162. Communication interface 167 may include one or more transmitters, one or more receivers, one or more transceivers, and/or circuitry for transmitting and/or receiving communication signals. The communication interface 167 can include hardware components and/or software components implementing a particular communication protocol suitable for transporting signals to other devices in the networked system 100. The communication interface 167 can be referred to as a communication device or a communication interface module.

Memory 168 is coupled to the processor 162. The memory 168 may be any suitable storage device, such as a cache memory (e.g., a cache memory of the processor 162), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, solid state drives, other forms of volatile and non-volatile memory, or a combination of different types of memory.

The memory 168 can be configured to store medical images, subject information, measurements, data, or files relating to a subject's medical history, history of procedures performed, anatomical or biological features, characteristics, or medical conditions associated with a subject, computer readable instructions, such as code, software, or other application, as well as any other suitable information or data. Subject information may include measurements, data, files, other forms of medical history, such as but not limited to ultrasound images, ultrasound videos, and/or any imaging information relating to the subject's anatomy. The subject information may include parameters related to an imaging procedure such as an anatomical scan window, a probe orientation, and/or the subject position during an imaging procedure. The memory 168 can also be configured to store information related to the training and implementation of machine learning algorithms (e.g., neural networks) and/or information related to implementing image classification models/algorithms, image recognition algorithms for detecting anatomy, segmenting anatomy, image quantification algorithms, and/or image acquisition guidance algorithms. Memory 168 may store output of explainable classification model 120.

Medical imaging console 170 may include a processor 172, input device 174, display 176, communication interface 177, and memory 178.

Processor 172 may include a central processing unit (CPU), a digital signal processor (DSP), an application specific integrated circuit (ASIC), a controller, a field programmable gate array (FPGA) device, another hardware device, a firmware device, or any combination thereof configured to perform the operations described herein. The processor 172 may also be implemented as a combination of computing devices, e.g., a combination of a DSP and a microprocessor, a plurality of microprocessors, one or more microprocessors in conjunction with a DSP core, or any other such configuration. The processor 172 is configured to process the instructions stored in memory 178. The processor 172 is connected to the communication interface 177.

Input device 174 allows a user to make selections or provide instructions to the medical imaging console 170. The input device may be a mouse, touch-screen, touch pad, etc. Display 176 is coupled to processor 172. Display 176 may be a monitor or any suitable display. Display 176 is configured to display classifications and saliency maps from explainable classification model 120 as described herein. Furthermore, display 176 may be configured to display the images from the data generated by medical imaging device 180.

The communication interface 177 is coupled to the processor 172. The communication interface 177 may include one or more transmitters, one or more receivers, one or more transceivers, and/or circuitry for transmitting and/or receiving communication signals. The communication interface 177 can include hardware components and/or software components implementing a particular communication protocol suitable for transporting signals to other devices in the networked system 100. The communication interface 177 can be referred to as a communication device or a communication interface module.

The memory 178 is coupled to the processor 172. The memory 178 may be any suitable storage device, such as a cache memory (e.g., a cache memory of the processor 172), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, solid state drives, other forms of volatile and non-volatile memory, or a combination of different types of memory.

The memory 178 can be configured to store medical images, subject information, measurements, data, or files relating to a subject's medical history, history of procedures performed, anatomical or biological features, characteristics, or medical conditions associated with a subject, computer readable instructions, such as code, software, or other application, as well as any other suitable information or data. Subject information may include measurements, data, files, other forms of medical history, such as but not limited to ultrasound images, ultrasound videos, and/or any imaging information relating to the subject's anatomy. The subject information may include parameters related to an imaging procedure such as an anatomical scan window, a probe orientation, and/or the subject position during an imaging procedure. The memory 178 can also be configured to store information related to the training and implementation of machine learning algorithms (e.g., neural networks) and/or information related to implementing image classification models/algorithms, image recognition algorithms for detecting anatomy, segmenting anatomy, image quantification algorithms, and/or image acquisition guidance algorithms, including those described herein. Memory 178 may store output of explainable classification model 120.

Medical imaging device 180 may generate medical images 185. The medical imaging device is in communication with medical imaging console 170, e.g., through the communication interface 177. The medical images generated by data from the medical imaging device 180 may be shown on display 176. Medical images 185 may also be communicated to any of the computers, networks/clouds, data servers 110, 140, 160.

In some aspects, aspects of the present disclosure can be implemented with medical images 185 of subjects obtained using any suitable medical imaging device 180 and/or modality. Examples of medical images and medical imaging devices include x-ray images (angiographic images, fluoroscopic images, images with or without contrast) obtained by a medical imaging device such as an ultrasound imaging device, X-ray imaging device, computed tomography (CT) images obtained by a CT imaging device, positron emission tomography-computed tomography (PET-CT) images obtained by a PET-CT imaging device, magnetic resonance images (MRI) obtained by an MRI imaging device, single-photon emission computed tomography (SPECT) images obtained by a SPECT imaging device, optical coherence tomography (OCT) images obtained by an OCT imaging device, and intravascular photoacoustic (IVPA) images obtained by an IVPA imaging device. The medical imaging device 180 can obtain the medical images while positioned outside the subject body, spaced from the subject body, adjacent to the subject body, in contact with the subject body, and/or inside the subject body.

Training dataset 150 may be stored on network/cloud computer 110, data server 140, or any other network or cloud computing environment. In some aspects, the systems described herein may be provided as a cloud service. Client sites may connect to the cloud service to provide training data and to receive image classification services.

It should be noted that the examples described above are provided for purposes of illustration, and are not intended to be limiting. Other devices and/or device configurations may be utilized to carry out the operations described herein.

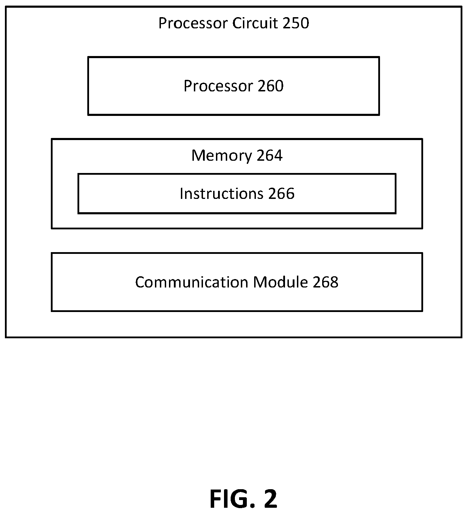

Fig. 2 is a schematic diagram of a processor circuit 250, according to aspects of the present disclosure. The processor circuit 250 may be implemented in the network/cloud computer 110, 140, user computer 160, imaging console 170, or other devices or workstations (e.g., third-party workstations, network routers, etc.), or on a cloud processor or other remote processing unit, as necessary to implement the method and systems described herein. As shown, the processor circuit 250 may include a processor 260, a memory 264, and a communication interface 268. These elements may be in direct or indirect communication with each other, for example via one or more buses.

The processor 260 may include a central processing unit (CPU), a digital signal processor (DSP), an ASIC, a controller, or any combination of general-purpose computing devices, reduced instruction set computing (RISC) devices, application-specific integrated circuits (ASICs), field programmable gate arrays (FPGAs), or other related logic devices, including mechanical and quantum computers. The processor 260 may also comprise another hardware device, a firmware device, or any combination thereof configured to perform the operations described herein. The processor 260 may also be implemented as a combination of computing devices, e.g., a combination of a DSP and a microprocessor, a plurality of microprocessors, one or more microprocessors in conjunction with a DSP core, or any other such configuration.

The memory 264 may include a cache memory (e.g., a cache memory of the processor 260), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, other forms of volatile and non-volatile memory, or a combination of different types of memory. In an aspect, the memory 264 includes a non-transitory computer-readable medium. The memory 264 may store instructions 266. The instructions 266 may include instructions that, when executed by the processor 260, cause the processor 260 to perform the operations described herein. Instructions 266 may also be referred to as code. The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may include a single computer-readable statement or many computer-readable statements.

The communication interface 268 can include any electronic circuitry and/or logic circuitry to facilitate direct or indirect communication of data between the processor circuit 250, and other processors or devices. In that regard, the communication interface 268 can be an input/output (I/O) device. In some instances, the communication interface 268 facilitates direct or indirect communication between various elements of the processor circuit 250 and/or computers of networked system 100. The communication interface 268 may communicate within the processor circuit 250 through numerous methods or protocols. Serial communication protocols may include but are not limited to United States Serial Protocol Interface (US SPI), Inter-Integrated Circuit (I2C), Recommended Standard 232 (RS-232), RS-485, Controller Area Network (CAN), Ethernet, Aeronautical Radio, Incorporated 429 (ARINC 429), MODBUS, Military Standard 1553 (MIL-STD-1553), or any other suitable method or protocol. Parallel protocols include but are not limited to Industry Standard Architecture (ISA), Advanced Technology Attachment (ATA), Small Computer System Interface (SCSI), Peripheral Component Interconnect (PCI), Institute of Electrical and Electronics Engineers 488 (IEEE-488), IEEE-1284, and other suitable protocols. Where appropriate, serial and parallel communications may be bridged by a Universal Asynchronous Receiver Transmitter (UART), Universal Synchronous Receiver Transmitter (USART), or other appropriate subsystems.

External communication (including but not limited to software updates, firmware updates, model/data sharing between the processor and central server, or outputs generated by the explainable classification model described herein) may be accomplished using any suitable wireless or wired communication technology, such as a cable interface such as a universal serial bus (USB), micro USB, Lightning, or FireWire interface, Bluetooth, Wi-Fi, ZigBee, Li-Fi, or cellular data connections such as 2G/GSM (global system for mobiles), 3G/UMTS (universal mobile telecommunications system), 4G, long term evolution (LTE), WiMax, or 5G. For example, a Bluetooth Low Energy (BLE) radio can be used to establish connectivity with a cloud service, for transmission of data, and for receipt of software patches. The controller may be configured to communicate with a remote server, or a local device such as a laptop, tablet, or handheld device, or may include a display capable of showing status variables and other information. Information may also be transferred on physical media such as a USB flash drive or memory stick.

Fig. 3 is a schematic diagram of a deep learning network configuration, according to aspects of the present disclosure. The configuration 300 can be implemented by a deep learning network. The configuration 300 includes a deep learning network 310, which may include one or more CNNs 312. The CNN 312 is one example of a type of predictive model, i.e., predictive network 122. For simplicity of illustration and discussion, Fig. 3 illustrates one CNN 312. In some aspects, deep learning network 310 may be scaled to include any suitable number of CNNs 312 (e.g., about 2, 3 or more). The configuration 300 can be trained for identification of various anatomy (organs, tissue, bone) and/or other features (natural and/or man-made) within a patient anatomy. The configuration 300 can be further trained for segmenting human anatomy, diagnosis medical conditions or any number of other diagnostic or medical tasks.

The CNN 312 may include a set of N convolutional layers 320 followed by a set of K fully connected layers 330, where N and K may be any positive integers. The convolutional layers 320 are shown as 320(1) to 320(N). The fully connected layers 330 are shown as 330(1) to 330(K). Each convolutional layer 320 may include a set of filters 322 configured to extract features from an input 302 (e.g., medical images or other additional data). The values N and K and the size of the filters 322 may vary. In some instances, the convolutional layers 320(1) to 320(N) and the fully connected layers 330(1) to 330(K-1) may utilize a leaky rectified non-linear (ReLU) activation function and/or batch normalization. The fully connected layers 330 may be non-linear and may gradually shrink the high-dimensional output to a dimension of the prediction result 340 (e.g., detections of cancerous tissue in the form of a classification). The fully connected layers 330 may also be referred to as a classifier. In some aspects, the fully convolutional layers 320 may additionally be referred to as perception or perceptive layers.

When the prediction result 340 takes the form of classification output, it may indicate a confidence score (e.g., a probability) for each class 342 based on the input image 302. The classes 342 are shown as 342a, 342b, ..., 342c. For example, when the CNN 312 is trained for detecting multiple types of cancerous tissue, the classes 342 may indicate a first type class 342a, a second type class 342b, a third type class 342c, or any other suitable class. A class 342 indicating a high confidence score indicates that the input image 302 or a section or pixel of the image 302 is likely to include an anatomical object/feature of the class 342. Conversely, a class 342 indicating a low confidence score indicates that the input image 302 or a section or pixel of the image 302 is unlikely to include an anatomical object/feature of the class 342.

The CNN 312 can also output a feature vector 350 at the output of the last convolutional layer 320(N). The feature vector 350 may indicate objects detected from the input medical image 302 or other data. For example, the feature vector 350 may indicate regions associated with cancerous tissue as identified from the image 302, which may be a patient medical image. The feature vector 350 may indicate the pixels in a medical image associated with the location of cancerous tissue, as described herein. Feature vector 350 may be an example of network layer data used to generate a saliency map.

The deep learning network 310 may implement or include any suitable type of learning network. For example, in some aspects and as described in relation to Fig. 3, the deep learning network 310 could include a convolutional neural network 312. In addition, the convolutional neural network 310 may additionally or alternatively be or include a multi-class classification network, an encoder-decoder type network, a fully connected deep learning network, or any suitable network or means of identifying features within an image.

In some aspects, when the deep learning network 310 includes a fully-connected neural network, the fully connected neural network may transform non-image data related to a medical image or it may transform data derived from an image (e.g., detected objects) generated by another network, program, or human annotator. For example, the fully connected neural network may transform non-image information about a patient, such as age, weight, or other low-dimensional data.

In some aspects, the deep learning network 310 may include an encoder-decoder network, which may include two paths. One path may be a constricting path, in which a large image, such as the image 302, may be convolved by several convolutional layers 320 such that the size of the image 302 changes in relation to the depth of the network layer. The image 302 may then be represented in a low dimensional space, or a flattened space. From this flattened space, an additional path may expand the flattened space to the original size of the image 302. In some aspects, the encoder-decoder network implemented may also be referred to as a principal component analysis (PCA) method. In some aspects, the encoder-decoder network may segment the image 302 into patches. In an additional aspect of the present disclosure, the deep learning network 310 may include a multi-class classification network. The multi-class classification network may include an encoder path. For example, the image 302 may be of a high dimensional image. The image 302 may then be processed with the convolutional layers 320 such that the size is reduced. The resulting low dimensional representation of the image 302 may be used to generate the feature vector 350 shown in Fig. 3. The low dimensional representation of the image 302 may additionally be used by the fully connected layers 330 to regress and output one or more classes 342. In some regards, the fully connected layers 330 may process the output of the encoder or convolutional layers 320. The fully connected layers 330 may additionally be referred to as task layers or regression layers, among other terms.

Any suitable combination or variations of the deep learning network 310 described is fully contemplated. For example, the deep learning network may include fully convolutional networks or layers or fully connected networks or layers or a combination of the two. In addition, the deep learning network may include a multi-class classification network, an encoder-decoder network, or any combination of networks.

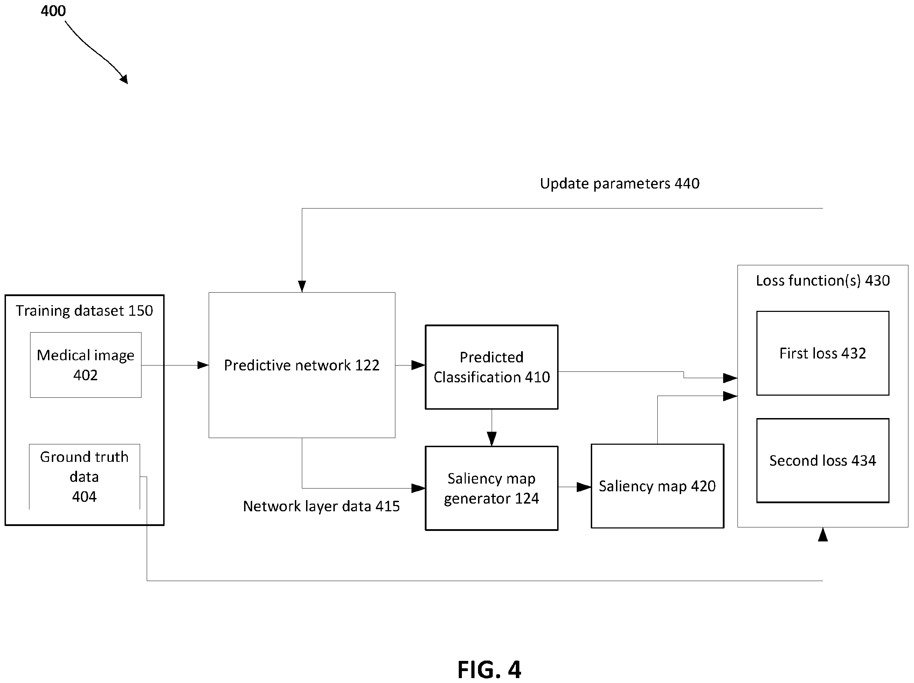

Fig. 4 is a schematic diagram of at least a portion of a training system 400 for a predictive network 122, according to aspects of the present disclosure. Training system 400 trains the predictive network 122 to accurately predict classifications from the context provided at inference and to do so in an explainable manner. Predictive network 122 is trained by providing medical images with known ground truth classifications (e.g., whether or not there is cancerous tissue present in an image). In some instances, medical images in the training data will be accompanied with a ground truth data/image that identifies the important features related to the ground truth classification, e.g., a saliency map. Training system 400 includes predictive network 122, saliency map generator 124, and loss functions 430.

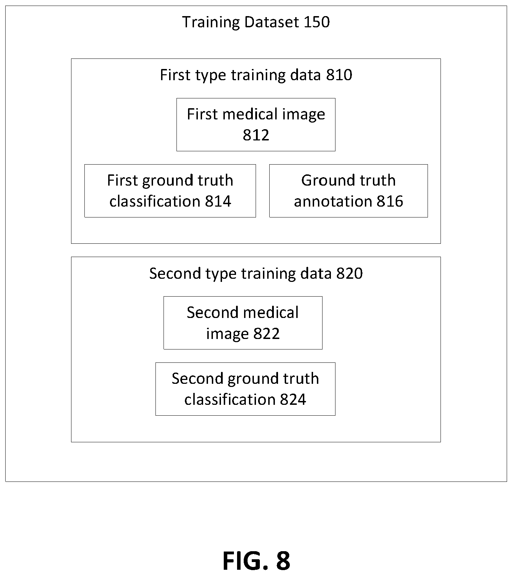

Training dataset 150 may include medical images 402 and ground truth data 404. Medical images may be gathered through imaging modalities as described herein, including NMR, CT, X-ray, etc. As further described in Fig. 8, some samples of ground truth data may include two separate types of ground truth data, ground truth classification and ground truth annotation. Ground truth annotation identifies the important features, regions, or areas of a medical image that are relevant to the ground truth classification. For example, a ground truth annotation might identify the regions of an image where cancerous tissue is present. Ground truth annotation may comprise pixel-wise annotations, a bounding box, target connected component count, or a target shape feature. In other examples of ground truth training data, only a classification may be available. The predictive network 122 may be trained using both types of ground truth data 404.

Predictive network 122 may receive medical image 402 and generate predicted classification 410. Predictive network 122 may include one or more neural networks suitable for image classification and other tasks, e.g., CNN 312 as described in Fig. 3. In some aspects, the predicted classification 410 may be a binary output, e.g., "yes" or "no" as a response to a task question such as "Is cancerous tissue present in the medical image." In other aspects, the predicted classification 410 may be a number in some range, e.g., 0 to 1, indicating a degree or confidence score. For example, an output classification of 0.5 may indicate uncertainty about whether the input medical image includes cancerous tissue or not. In some aspects, predicted classification 410 may include regression values for relevant quantities in the medical task or medical image. For example, regression values, may include volume of tissue, disease stage, etc.

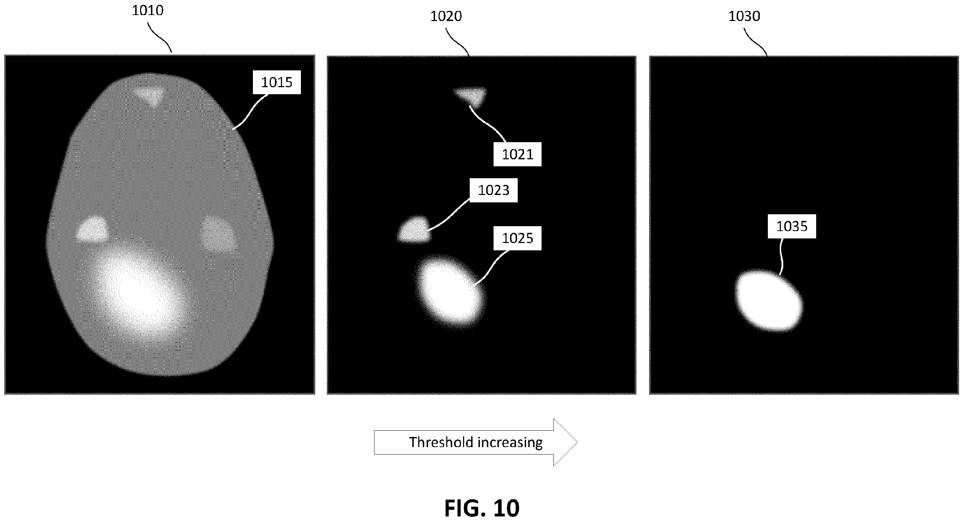

In some aspects, when ground truth data includes ground truth annotations, a saliency map generator 124 may receive predicted classification 410 and/or network layer data 415 and generate a saliency map 420. In some aspects, network layer data 415 can include the layer data of any one or more layers and/or a subset of any one or more layers, including the output predicted classification. In some aspects, saliency maps may be further processed. For example, a threshold may be applied to pixel values of a saliency map. For pixels which meet the threshold, their value may be set to one, while those pixels with an value below the threshold are set to zero. In this way a binary saliency map may be generated. Processing a saliency map through thresholding is further described in Fig. 10.

In some aspects, saliency maps may be generated using a gradient-based approach. Popular examples are guided backpropagation as described in Jost Tobian Springenberg et al., Striving for Simplicity: The All Convolutional Net, arXiv: 1412.6806 (2014); and GradCAM as described in Ramprasaath R. Selvaraju et al., Grad-CAM.- Visual Explanations from Deep Networks via Gradient-based Localization, arXiv:1610.02391 (2016). Both references are incorporated herein in their entirety. In guided backpropagation, a saliency map is generated by calculating the partial derivative of each network output, e.g., the classification output 340, with respect to the input, e.g., medical image 302. This yields a gradient tensor, i.e., the saliency map, with the same shape as the input image. Each pixel value in the saliency map thus describes by how much the network output will change if the input image is modified at that pixel location. In some aspects, one or more other intermediate outputs of the neural network, e.g., feature vector 350 or the outputs of layers in the CNN 312, may be used to calculate a gradient tensor. To make the saliency maps more meaningful, guided backpropagation uses a modification of the gradient where all negative gradient values in intermediate feature maps are set to zero. This leads to higher spikes of positive responses and overall, more appealing saliency maps. After generation, saliency maps may be post-processed, e.g. by selecting only positive values, only negative values, or calculating the absolute value. One of ordinary skill in the art would understand that the systems and methods described herein are applicable to different methods of generating a saliency map in addition to those described herein.

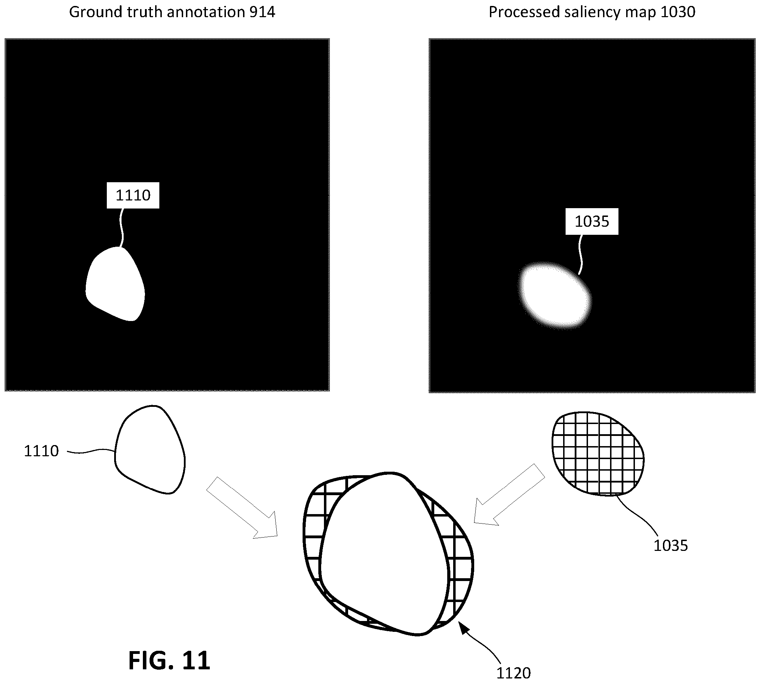

Using loss functions 430 training system 400 compares the predicted classification and saliency map with ground truth data 404, including ground truth classifications and ground truth annotations. Loss functions 430 may include objectives/functions which penalize to a greater or lesser extent erroneous classifications and/or saliency maps as determined by a comparison with the ground truth data 404. Losses may be chosen based on the task and/or data type. For example, some loss functions may compare the processed saliency maps, e.g., a binary saliency map, with ground truth annotations in the ground truth data. Some examples of losses may be the L1 and L2 loss, mean-squared error loss, cross-entropy losses, Kullback Leibler divergence loss, Dice score, etc. Losses and the types of comparisons they may correspond to are further described in Figs. 11-13.

Loss functions 430 may include a first loss function 432 and second loss function 434. The first loss function 432 may be used to compare the predicated classification 410 with the ground truth classification in the ground truth data 404. The second loss function may be used to compare the saliency map 420 with the ground truth annotations in the ground truth data 404. In some aspects, the second loss function may make a comparison based on shape features of the saliency map and ground truth annotations. Examples of the second loss function and shape features are further described in Figs. 11-13. In some aspects, the first loss 432 and second loss 434 are summed together to form a total loss to use in updating the predictive network 122. For example, the total loss may be written:

$$L_{total} = \alpha L_{Class} + (1 - \alpha) L_{Saliency} \tag{1}$$

where $\alpha$ is a weight used to balance classification and saliency loss. In some aspects, $\alpha$ may be updated during training. In some aspects, the loss function may be non-differentiable, e.g., when using the number of connected components for comparison of saliency maps to ground truth annotations, so reinforcement learning may be used.

Comparisons from the loss functions 430 may update parameters 440 of the predictive network 122. In some instances, updating may be accomplished using gradient of the objective functions and backpropagation to update the parameters of the predictive network 122.

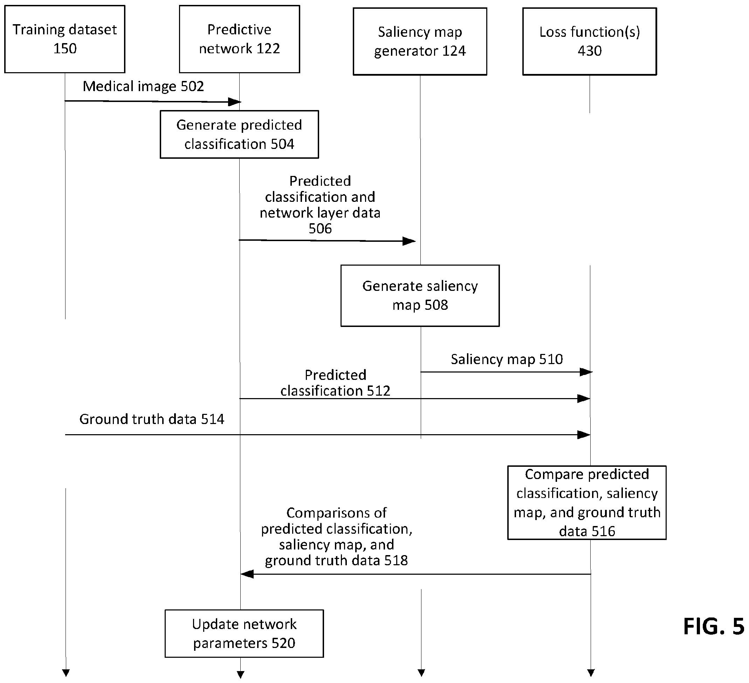

Fig. 5 is a schematic sequence diagram of a process for a training system 400 for training predictive network 122, according to aspects of the present disclosure. The training system can include training dataset 150, predictive network 122, saliency map generator 124, and loss functions 430.

At step 502, the predictive network 122 receives a medical image 402 from the training dataset 150.

At step 504, the predictive network 122 generates a predicted classification 410 from the medical image 402.

At step 506, saliency map generator 124 receives predicted classification 410 and network layer data 415.

At step 508, the saliency map generator 124 generates a saliency map. In some aspects, when a ground truth annotation is not available, the saliency map generator 124 may not generate a saliency map because there is nothing to compare it to for training.

At step 510, saliency map 420 is provided to loss function(s) 430.

At step 512, predicted classification 410 is provided to loss function(s) 430.

At step 514, ground truth data 404 is provided to loss function(s) 430. In some aspects, ground truth data may include both a ground truth classification and/or ground truth annotation (e.g., ground truth data 404).

At step 516, loss functions(s) are used to compare the predicted classification 410 and/or saliency map 420 with the ground truth classification and/or ground truth annotation, respectively.

At step 518, comparisons using loss functions are provided to predictive network 122.

At step 520, predictive network 122 is updated using the comparisons using loss functions 430, e.g., using backpropagation of gradients of the loss functions 430.

One skilled in the art will appreciate that steps in the process may be performed separately or concurrently and in other arrangements. Furthermore, some steps may not be performed.

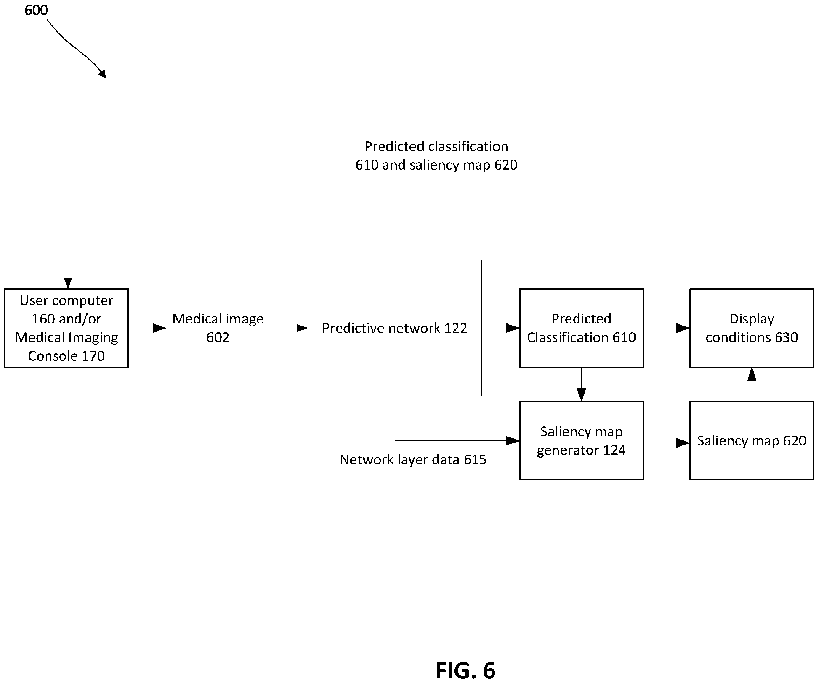

Fig. 6 is a schematic diagram of at least a portion of an explainable medical image classification system 600, according to aspects of the present disclosure. Explainable medical image classification system 600 generates a prediction (e.g., predicted classification 610) for a specific task from a medical image 602. For example, system 600 may predict whether or not cancerous tissue is present in a medical image. The medical image 602 may be provided by a user, including clinicians, doctors, or other medical professionals. In addition to a prediction, system 600 may generate a saliency map 620 that explains and identifies the features relevant to the system's prediction and provide them to a user.

The explainable medical image classification system 600 may include predictive network 122 and saliency map generator 124.

The explainable medical image classification system 600 may receive a medical image 602 from a user computer 160 or medical imaging console 170. Medical images may be gathered through imaging modalities as described herein, including NMR, CT, X-ray, etc. In some aspects, medical image 602 may be one or more of a set of medical images 185 generated using a medical imaging device 180.

Predictive network 122 may receive medical image 602 and generate predicted classification 610. Predictive network 122 may include one or more neural networks suitable for image classification and other tasks, e.g., CNN 312 as described in Fig. 3. In some aspects, the predicted classification 610 may be a binary output, e.g., "yes" or "no" as a response to a task question such as "Is cancerous tissue present in the medical image." In other aspects, the predicted classification 610 may be a number in some range, e.g., 0 to 1, indicating a degree. For example, an output classification of 0.5 may indicate large uncertainty about whether the input medical image includes cancerous tissue or not. In some aspects, predicted classification 610 may include regression values for relevant quantities in the medical task or medical image. For example, regression values, may include volume of tissue, disease stage, etc.

A saliency map generator 124 may receive predicted classification 610 and/or network layer data 615 and generate a saliency map 620. In some aspects, network layer data 615 can include the layer data of any one or more layers and/or a subset of any one or more layers, including the output predicted classification. In some aspects, saliency maps may be further processed. For example, a threshold may be applied to pixel values of a saliency map. For pixels which meet the threshold, their value may be set to one, while those pixels with an value below the threshold are set to zero. In this way a binary saliency map may be generated. Processing a saliency map through thresholding is further described in Fig. 10.

The predicted classification 610 and saliency map 620 may be compared with display conditions 630 to determine if the predicted classification and/or the saliency map will be shown to a user. In some aspects, display conditions may include shape constraints for features in a saliency map that when not satisfied or met by the saliency map cause the system to not display the saliency map and/or the predicted classification to a user. For example, shape constraints may include a minimum or maximum number of connected components, size or volume, or ratio of eigenvectors (e.g., from a principal component analysis of the shape) of features in the saliency map that must be met. Furthermore, in some aspects, the predicted classification may not be shown when a threshold on the confidence of a result is low. For example, when the predicted classification indicates presence of cancerous tissue and the system generated a classification of 0.5, i.e., equally split between there is cancerous tissue (e.g., classification equal to 0) and there is not cancerous tissue (classification equal to 1), then the predicted classification may not be displayed to a user. A display condition may include a double-sided, i.e., an upper and lower, threshold for allowing predicted classifications and/or saliency maps to be displayed. For example, a classification must be less than or equal to 0.2 or greater than or equal to 0.8. Other thresholds may be set and in other ranges of classification beyond 0 to 1.

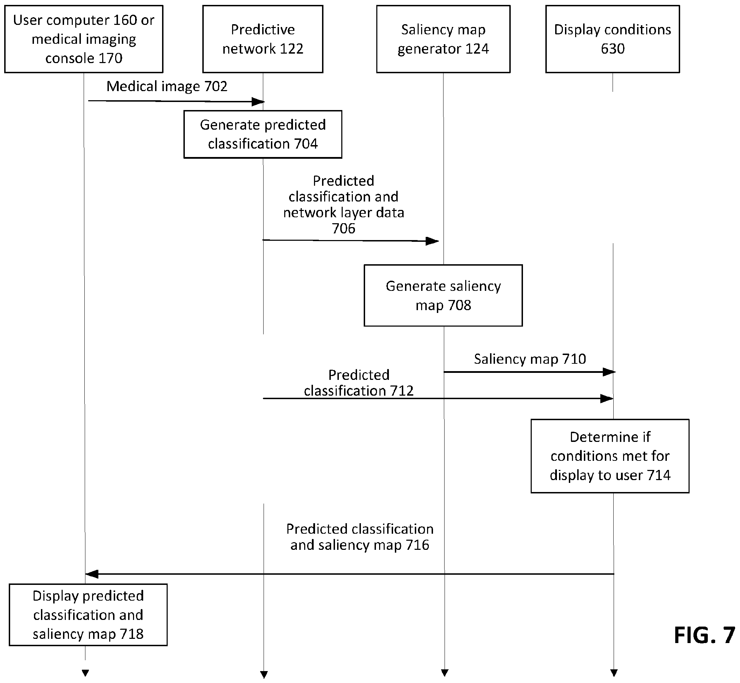

Fig. 7 is a schematic sequence diagram of a process for a system for explainable medical image classification 600, according to aspects of the present disclosure. The system for training a predictive network can include user computer 160 or medical imaging console 170, predictive network 122, saliency map generator, and display conditions 630.

At step 702, a medical image 602 is received at a predictive network from a user computer 160 or medical imaging console 170. In some aspects, the medical image 602 may be selected, input, or sent by a user to network 110.

At step 704, predictive network 122 generates a predicted classification 610.

At step 706, the predicted classification 610 and/or network layer data 615 is provided to the saliency map generator 124.

At step 708, the saliency map generator 124 generates a saliency map 620. In some aspects, further processing may be done on the saliency map 620, e.g., thresholding as described herein.

At step 710, saliency map 620 is provided to display conditions 630.

At step 712, predicted classification 610 is provided to display conditions 630.

At step 714, display conditions 630 determine if conditions are met to display predicted classification 610 and/or saliency map 620 to a user.

At step 716, when display conditions are met, predicted classification 610 and/or saliency map 620 are provided to the user computer 160 or medical imaging console 170. Alternatively, when display conditions are not met, a notification may be provided to a user that notes a low confidence score for the generated results.

At step 718, User computer or medical imaging console 170 may display predicted classification and/or saliency map, e.g., to a user such as a medical professional.

One skilled in the art will appreciate that steps in the process may be performed separately or concurrently and in other arrangements.

Fig. 8 is a schematic diagram of training data in a training dataset 150, according to aspects of the present disclosure. As described herein, training dataset 150 may include at least two different types of training data. The first type of training data 810 includes a first medical image 812, first ground truth classification 814, and ground truth annotation 816. The second type of training data 820 includes second medical image 822 and second ground truth classification 824. The first type of training data represents the more information rich type, including a ground truth annotation 816 not included in the second type of training data 820. The two types of training data reflect the fact that ground truth annotations may not always be available for a given medical image. For example, time and cost may prevent creating ground truth annotations for a large database of medical images. Conversely, in some instances, ground truth classifications may not be available. Medical images 812, 822 may include lab reports, medical device data (e.g., ECG, EEG) and any prior medical images or data containing information that may also be available. In some instances, such information can be found in Electronic Medical Records (EMRs) and Electronic Health Records (EHR). The images can also be augmented by radiology reports of the medical images. In some aspects, the explainable medical image classification system described herein may be trained on the different types of training data, i.e., first type 810, second type 820, and missing classification training data. Ground truth annotations may include pixel markers or other identifications of task-relevant aspects or regions in a medical image.

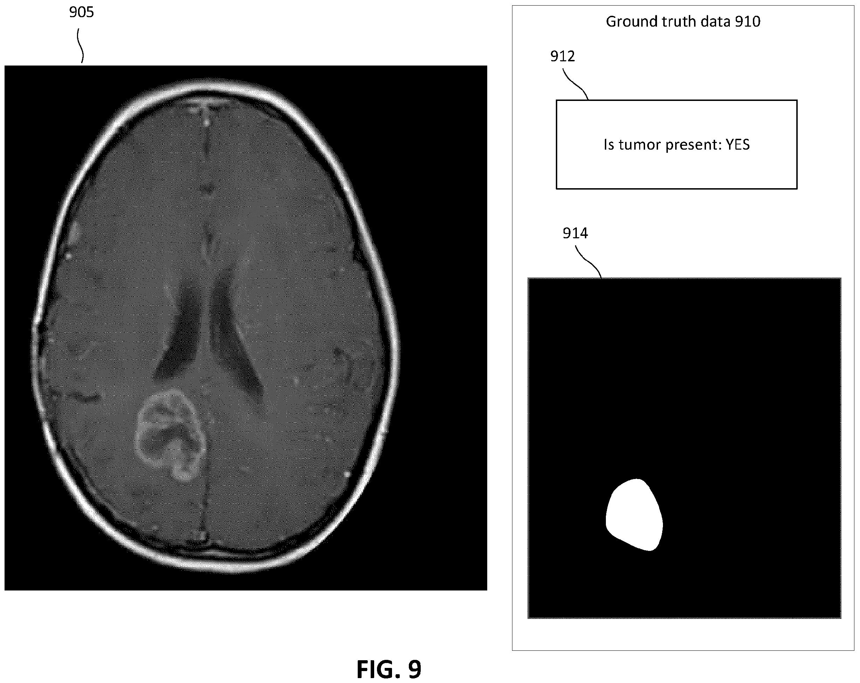

Fig. 9 is an example of training data in the training dataset 150, according to aspects of the present disclosure. Medical image 905 is an MRI of a brain that includes a tumor (present in the lower portion of the image, left of center). Associated with the medical image 905 is ground truth data 910. Ground truth data 910 includes ground truth classification 912 that indicates that a tumor is present ("Is tumor present: YES") and a ground truth annotation 914 that marks with bright pixel values the region of the medical image 905 containing the tumor.

Fig. 10 is a schematic diagram of saliency map processing, according to aspects of the present disclosure. In some aspects, comparing a saliency map to a ground truth annotation may require processing the saliency map. Saliency map processing may be done by applying a threshold to the pixel/voxel values in the saliency map. Thresholds may be a numerical maximum or minimum for pixel values, e.g., 0.6 for pixel values in a range from 0 to 1. The sequence of saliency maps includes a saliency map with no threshold 1010, a first processed saliency map 1020 with a lower threshold, and a second processed saliency map with a higher threshold.

Saliency map 1010 depicts all the contributions of the image pixels to the predicted classification. Brighter spots, i.e., higher pixel values, indicate a greater relative contribution to the predicted classification as compared to darker spots, i.e., lower pixel values. As shown, the entire cross-section 1015 of the skull can be seen in the saliency map without threshold applied.

Saliency map 1020 is processed with a non-zero threshold value. Compared to saliency map 1010 without threshold, saliency map 1020 indicates many fewer pixels contribute to the predicted classification. Pixels with intensities less than (or equal to) the threshold have been set to zero in saliency map 1020. There remain three regions 1021, 1023, 1025 with non-zero pixel intensity.

Saliency map 1030 is processed with a non-zero threshold value greater than the threshold used to generate saliency map 1030. Compared to saliency map 1020 with a lower threshold, saliency map 1030 indicates fewer pixels contributing to the predicted classification. Pixels with intensities less than (or equal to) the threshold have been set to zero in saliency map 1020. There remains only one region 1035 with non-zero pixel intensity.

In some aspects, the result of applying a threshold to a saliency map may be a binary saliency map, where each pixel is set to one if above a threshold and zero if below the threshold, or vice versa.

In some aspects, comparison of the saliency map with the ground truth annotation may be done with the processed saliency maps, applying thresholds as described herein, and alternatively, the comparison may be done between the unprocessed saliency map and the ground truth annotations. In some aspects, saliency processing is done by the saliency map generator 124, as described herein. It should be appreciated that any description of maximum or minimum may be reformulated as a minimum or maximum, respectively.

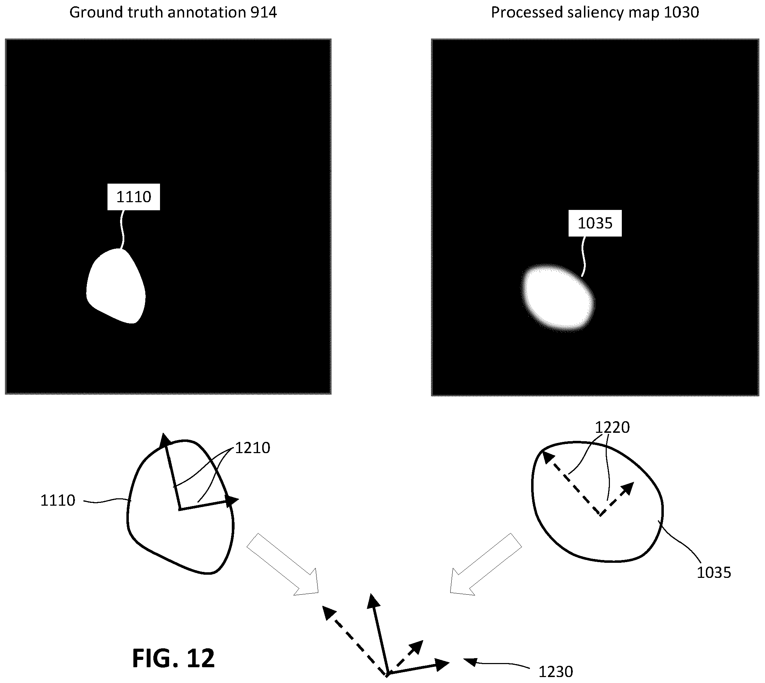

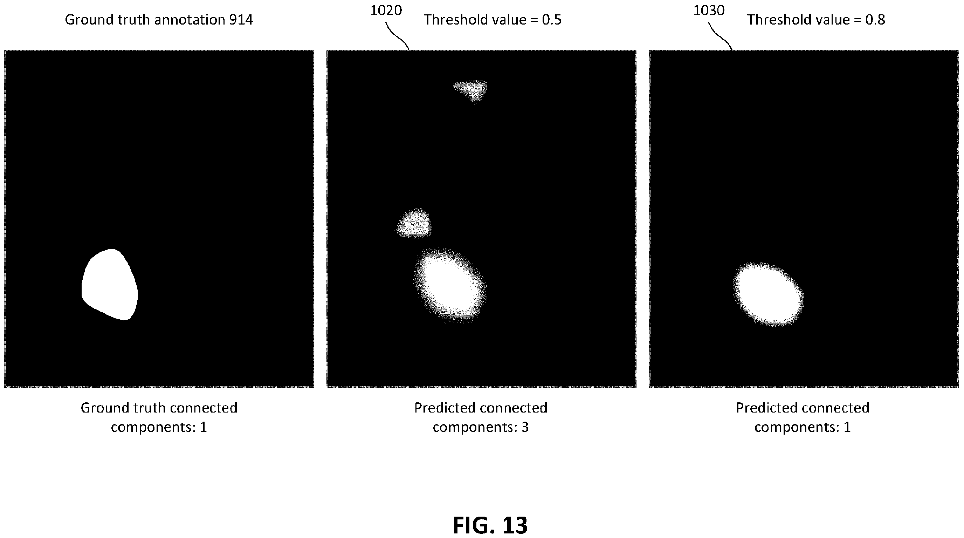

Figs. 11-13 depict different examples of comparisons between the ground truth annotations and (processed or unprocessed) saliency maps. The comparisons shown in Figs. 11-13 are merely examples to which this disclosure is not limited. Many different comparisons of the saliency map and ground truth annotations are possible. Comparisons may be between pixel intensities, with or without thresholding or processing, or shape features. Shape features may include the shape eigenvectors from a principal component analysis and the number of connect components of the features in the map and annotations. Fig. 11 depicts a direct comparison of the pixel intensities, according to aspects of the present disclosure. Fig. 12 depicts a comparison of the shape features as determined by eigenvector from a principal component analysis, according to aspects of the present disclosure. Fig. 13 depicts a comparison based on the number of connected components, according to aspects of the present disclosure. Similar comparisons may be made for saliency maps and ground truth annotations in 3D images (i.e., images comprised of voxels). Furthermore, one or more comparisons as implemented in an associated loss function may be used during training.

Fig. 11 is a schematic diagram of a direct comparison of the pixel intensities, according to aspects of the present disclosure. During training, the loss function for comparing the saliency map and the ground truth annotation may be a direct comparison of pixel intensities. For example, the second loss function may be:

$$L_{Saliency} = \sum_{i,j} |x_{i,j} - y_{i,j}|^2 \qquad (2)$$

Where $x_{i,j}$ is the ground truth annotation 914 pixel intensity in row i and column j of the pixel array and $y_{i,j}$ is the (processed or unprocessed) saliency map 1030 pixel intensity in row i and column j of the pixel array.

As shown in Fig. 11, ground truth annotation 914 includes the feature 1110, indicating the location of the tumor, and saliency map 1030 includes feature 1035, indicating the portion of the image contributing to a predicted classification. The loss function of Eq. (2) would be minimized if the features of the ground truth annotation 914 and saliency map 1030 overlapped exactly with equal pixel values/intensities. However, as shown in comparison 1120, the two features do not overlap exactly. Thus, the loss function will increase based on the extent of non-overlap of the features. In some aspects, during training, the predictive network 122 may updated based on the loss function in Eq. 2, which will improve the degree of overlap of the saliency map features with the important features of the medical images thus improving explainability.

In some aspects, the area (or volume if using a 3D image with voxels) of the largest feature in the saliency map and ground truth annotation may be compared.

Fig. 12 is a schematic diagram of a comparison of the shape from a principal component analysis, according to aspects of the present disclosure. During training, the loss function for comparing the saliency map and the ground truth annotation may be a comparison of shape features. Using the same ground truth annotation and saliency map as shown in Fig. 11, shape eigenvectors 1210, 1220 may be computed using principal component analysis and compared. For example, comparison 1230 shows that the orientation of the shape eigenvectors is different. A loss function may be parametrized to penalize this difference in orientation.

In some aspects, ratio of the length of eigenvectors may be compared between the ground truth annotation and saliency map. For example, a circle would have two shape eigenvectors of equal length, whereas an ellipse would have one eigenvector longer than another. Said another way, shape eigenvectors can be used to assess the roundness of the underlying structure. If the ratio is close to one, the structure has similar extent in all directions. If the structure is very different from one, the structure has rather an elongated structure. The first could be true, e.g., for a brain tumor whereas the latter could be used for a rib fracture. A loss function may be parametrized to penalize the difference in the ratio of lengths of the eigenvectors between the ground truth annotation and saliency map.

Fig. 13 is a schematic diagram of a comparison based on the number of connected components, according to aspects of the present disclosure. During training, the loss function for comparing the saliency map and the ground truth annotation may be a comparison of the number of connected components. Using the same ground truth annotation and saliency map as Fig. 11, the ground truth annotation 914 includes a single connected component and the saliency map 1030, processed with a high enough threshold, are includes a single connected component. However, as shown by processed saliency map 1020, the number of connected components may depend on the threshold value (saliency map 1020 depicts three connected components, not one). A loss function may be parametrized to penalize the difference in the number of connected components. In some aspects, the threshold value may be treated as a hyperparameter to be updated and optimized during training, as described herein.

In some aspects, the ground truth annotation may include a bounding box or other boundary marker. A predicted bounding box or boundary may be determined from a saliency map and the difference between the ground truth bounding box and the predicted bounding box compared through a loss function. For example, the loss function might be based on the centroid of the bounding boxes/boundaries and/or the length of the boundaries.

As described herein, any number of these shape features used for comparisons in loss functions for training may also be used to construct display conditions for showing the classification and/or saliency map to a user. For example, a condition for display may be that only one connected component is present in the processed saliency map. Therefore, with the threshold value set to 0.5, saliency map 1020 would not be displayed to the user.

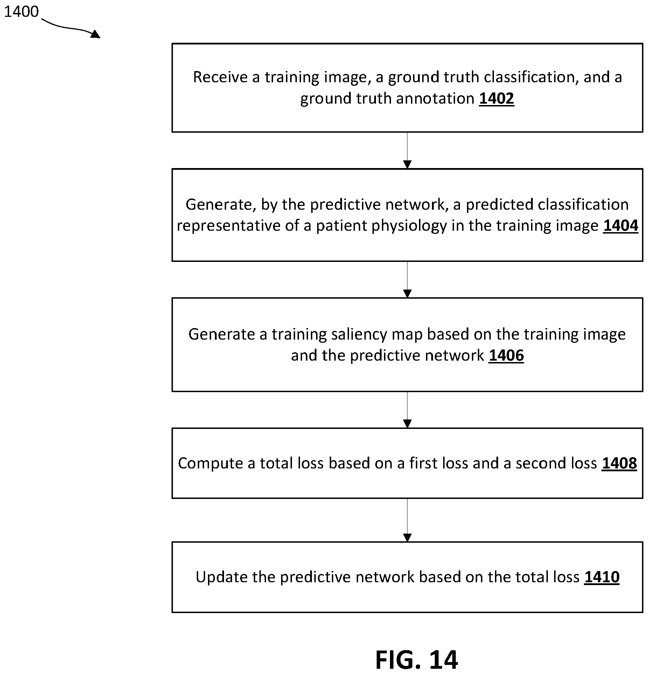

Fig. 14 is a schematic flow diagram of a method 1400 for training a predictive network 122 in an explainable medical image classification system, according to aspects of the present disclosure. It is understood that the steps of method 1400 may be performed in a different order than shown in Fig. 14, additional steps can be provided before, during, and after the steps, and/or some of the steps described can be replaced or eliminated in other aspects. One or more of steps of the method 1400 can be carried out by one or more devices and/or systems described herein, such as components of the networked system 100 and/or processor circuit 250.

In step 1402, the method 1400 includes receiving a training image 402, a ground truth classification, and a ground truth annotation. For example, contained in the training dataset 150. Ground truth annotations may include pixel-wise annotations, one or more bounding boxes, a target connected component count, or a target shape feature. As described herein, some training data may not include ground truth annotations.

In step 1404, the method 1400 includes generating, by the predictive network 122, a predicted classification 410 representative of a patient physiology in the training image 402.

In step 1406, the method 1400 includes generating a training saliency map 420 based on the training image and the predictive network (e.g., network layer data 415). In some aspects, generating a training saliency map may include applying a threshold to the plurality of pixels in the training saliency map. After thresholding, pixel locations that meet the threshold may be left at their original value/intensity or set to 1 and pixel locations that did not meet the threshold may be set to 0. The resulting saliency map may be referred to as a binary training saliency map.

In step 1408, the method 1400 includes computing a total loss based on a first loss 432 and a second loss 434. For example, the first loss compares the predicted classification 410 and ground truth classification and the second loss compares the training saliency map and the ground truth annotation. In some aspects, the total loss may include more than loss functions. For example, a different loss function may be used in the total loss function for each distinct type of shape feature. In some aspects, the second loss may compare ground truth annotations with shape features or other features of the training saliency map or the binary training saliency map. In other aspects, the second loss may compare the pixel values of the training saliency map or binary saliency map directly with associated ground truth annotations.

In step 1410, the method 1400 includes updating 440 the predictive network 122 based on the total loss. For example, updating may be done using backpropagation of gradients of the total loss.

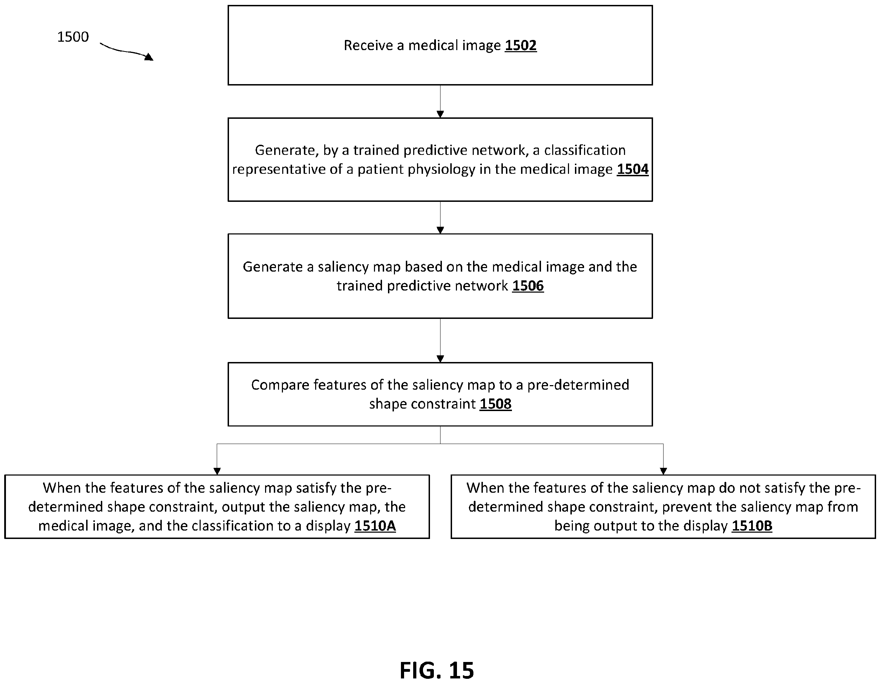

Fig. 15 is a schematic flow diagram of a method 1500 for explainable medical image classification, according to aspects of the present disclosure. It is understood that the steps of method 1500 may be performed in a different order than shown in Fig. 15, additional steps can be provided before, during, and after the steps, and/or some of the steps described can be replaced or eliminated in other aspects. One or more of steps of the method 1500 can be carried by one or more devices and/or systems described herein, such as components of the networked system 100 and/or processor circuit 250.

In step 1502, the method 1500 includes receiving a medical image 602. The medical image 602 may be receiver from user computer 160 or medical imaging console 170.

In step 1504, the method 1500 includes generating, by a trained predictive network 122, a classification 610 representative of a patient physiology in the medical image.

In step 1506, the method 1500 includes generating a saliency map 620 based on the medical image 602 and the trained predictive network (e.g. network layer data 615). The saliency map comprises a plurality of pixels, wherein values of the plurality of pixels are indicative of a region of the medical image contributing to the classification. In some aspects, generating a saliency map may include applying a threshold to the plurality of pixels in the saliency map. After thresholding, pixel locations that meet the threshold may be left at their original value/intensity or set to 1 and pixel locations that did not meet the threshold may be set to 0. The result saliency map may be referred to as a binary saliency map. Furthermore, shape features such as shape vectors and connected components may be determined from the saliency map or binary saliency map as described herein.

In step 1508, the method 1500 includes comparing features of the saliency map to a pre-determined shape constraint (e.g., display conditions 630).

In step 1510A, when the features of the saliency map satisfy the pre-determined shape constraint (i.e., the display conditions 630), the method 1500 includes outputting the saliency map 620, the medical image 602, and the classification 610 to a display (e.g., 116, 166, and/or 176).

In step 1510B, when the features of the saliency map do not satisfy the pre-determined shape constraint (i.e., the display conditions 630), the method 1500 includes preventing the saliency map 620 from being output to the display. In some aspects, the classification 610 may also be prevented from being displayed, as described herein.

Furthermore, the technology disclosed herein is also applicable to other medical imaging modalities obtained from a medical imaging device where 3D data is available, such as other ultrasound applications, camera-based videos, X-ray videos, and 3D volume images, such as computer aided tomography (CT) scans, magnetic resonance imaging (MRI) scans, optical coherence tomography (OCT) scans, or intravenous ultrasound (IVUS) pullback sequences. The technology described herein can be used in a variety of settings including emergency department, intensive care, inpatient, and out-of-hospital settings. When 3D images are used references herein to pixels should be understood to include voxels.

Accordingly, the logical operations making up the aspects of the technology described herein are referred to variously as operations, steps, objects, layers, elements, components, algorithms, or modules. Furthermore, it should be understood that these may occur or be performed or arranged in any order, unless explicitly claimed otherwise or a specific order is inherently necessitated by the claim language.

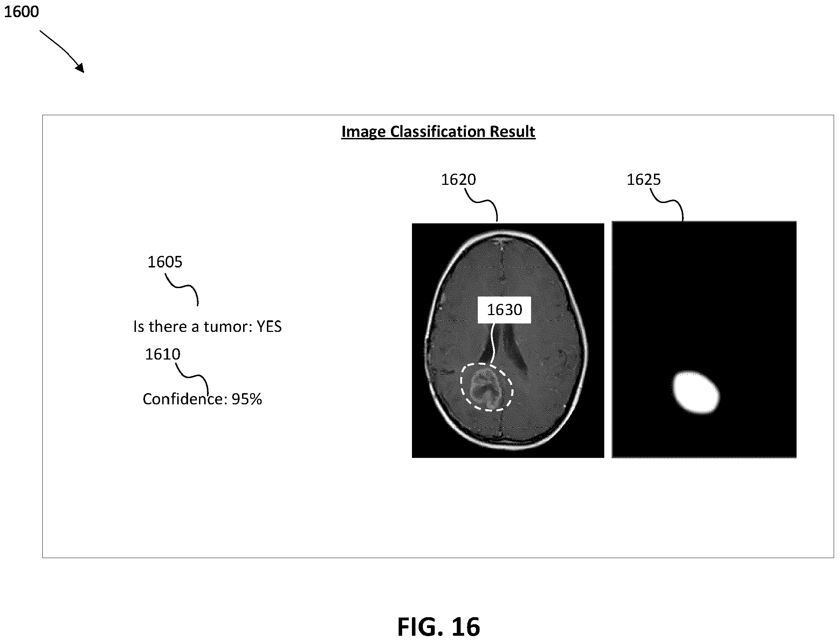

Fig. 16 is a screen display 1600 including results generated by the explainable medical imaging system, according to aspects of the present disclosure. Screen display 1600 may provide useful information to a user such as a medical professional as a part of the diagnostic and/or treatment process. Screen display may include a predicted classification 1605, a confidence score 1610, medical image 1620, and saliency map. In the depicted example, the explainable medical image classification system is trained for the task of determining if a tumor is present in a medical image. The classification system predicts that there is a tumor, "Is there a tumor: YES," with a confidence score of 95%. The medical image 1620 may be provided by the user or medical professional and used to make the predicted classification 1605 and saliency map 1625. Saliency map 1625 may be processed as described herein, e.g., by applying a threshold. The boundary of the feature present in the saliency map is depicted as overlay boundary 1630 on the original medical image. In this way, a medical professional will be able to quickly ascertain the quality of the prediction and convince themself that it is correct and trustworthy.

In some aspects, the display 1600 may instead notify the user that a classification and/or saliency map could not be provided for reasons described herein. For example, that the confidence score was below a pre-defined threshold (unrelated to the threshold applied during saliency map processing) or that the shape features in the saliency map did not meet the shape constraints as implemented in the display conditions.

All directional references e.g., upper, lower, inner, outer, upward, downward, left, right, lateral, front, back, top, bottom, above, below, vertical, horizontal, clockwise, counterclockwise, proximal, and distal are only used for identification purposes to aid the reader's understanding of the claimed subject matter, and do not create limitations. Connection references, e.g., attached, coupled, connected, joined, or "in communication with" are to be construed broadly and may include intermediate members between a collection of elements and relative movement between elements unless otherwise indicated. As such, connection references do not necessarily imply that two elements are directly connected and in fixed relation to each other. The term "or" shall be interpreted to mean "and/or" rather than "exclusive or." The word "comprising" does not exclude other elements or steps, and the indefinite article "a" or "an" does not exclude a plurality. Unless otherwise noted in the claims, stated values shall be interpreted as illustrative only and shall not be taken to be limiting.

The above specification, examples and data provide a complete description of the structure and use of exemplary aspects of explainable medical image classification as described herein. Although various aspects of the claimed subject matter have been described above with a certain degree of particularity, or with reference to one or more individual aspects, those skilled in the art could make numerous alterations to the disclosed aspects without departing from the spirit or scope of the claimed subject matter.

Still other aspects are contemplated. It is intended that all matter contained in the above description and shown in the accompanying drawings shall be interpreted as illustrative only of particular aspects and not limiting. Changes in detail or structure may be made without departing from the basic elements of the subject matter as defined in the following claims.

**Claims**

1. A computer-implemented method, comprising:

   receiving a medical image (602);
   generating, by a trained predictive network (122), a classification (610) representative of a patient physiology in the medical image (602);
   generating a saliency map (620) based on the medical image (602) and the trained predictive network (122), wherein the saliency map (620) comprises a plurality of pixels, wherein values of the plurality of pixels are indicative of a region of the medical image (602) contributing to the classification (610);
   comparing features of the saliency map to a pre-determined shape constraint (630); and when the features of the saliency map satisfy the pre-determined shape constraint (630), outputting the saliency map (620), the medical image (602), and the classification (610) to a display (166),

   when the features of the saliency map (620) do not satisfy the pre-determined shape constraint (630), preventing the saliency map (620) from being output to the display (166).

2. The method of claim 1, wherein generating the saliency map (620) further comprises applying a threshold to the plurality of pixels, thereby resulting in a binary saliency map.

3. The method of claim 2, wherein the features of the saliency map (620) comprise shape features determined from the binary saliency map.

4. The method of claim 3, wherein the shape features comprise a plurality of shape vectors (1220) determined using principal component analysis.

5. The method of claim 3, wherein the shape features comprise one or more connected components.

6. The method of claim 1,

   further comprising training a predictive network (122), thereby resulting in the trained predictive network (122), wherein the training the predictive network comprises:

      receiving a training image (402), a ground truth classification (404), and a ground truth annotation (404);

generating, by the predictive network (122), a predicted classification (410) representative of a patient physiology in the training image (402);

generating a training saliency map (420) based on the training image (402) and the predictive network (122);

computing a total loss (430) based on a first loss (432) and a second loss (434); and

updating (440) the predictive network based on the total loss,

wherein the first loss (432) is based on a comparison of the predicted classification (410) and the ground truth classification (404), and

wherein the second loss (434) is based on a comparison of the training saliency map (420) and the ground truth annotation (404).

7. The method of claim 6, wherein the ground truth annotation (404) comprises a pixel-wise ground truth annotation, a bounding box, target connected component count, or a target shape feature.

8. A system, comprising:
a processor circuit (250) configured to:

receive a medical image (602);

generate, by a trained predictive network (122), a classification (610) representative of a patient physiology in the medical image (602);

generate a saliency map (620) based on the medical image (602) and the trained predictive network (122), wherein the saliency map (620) comprises a plurality of pixels, wherein values of the plurality of pixels are indicative of a region of the medical image (602) contributing to the classification (610);

compare features of the saliency map to a pre-determined shape constraint (630); and

when the features of the saliency map satisfy the pre-determined shape constraint (630), output the saliency map (620), the medical image (602), and the classification (610) to a display (166),

when the features of the saliency map (620) do not satisfy the pre-determined shape constraint (630), prevent the saliency map (620) from being output to the display (166).

9. The system of claim 8, wherein the processor circuit (250) configured to generate the saliency map (620) is further configured to apply a threshold to the plurality of pixels, thereby resulting in a binary saliency map.

10. The system of claim 9, wherein the features of the saliency map (620) comprise shape features determined from the binary saliency map.

11. The system of claim 10, wherein the shape features comprise a plurality of shape vectors (1220) determined using principal component analysis.

12. The system of claim 10, wherein the shape features comprise one or more connected components.

13. The system of claim 8, wherein the processor circuit (250) is further configured to train a predictive network (122), thereby resulting in the trained predictive network (122),
wherein to train the predicted network the processor is further configured to:

receive a training image (402), a ground truth classification (404), and a ground truth annotation (404);

generate, by the predictive network (122), a predicted classification (410) representative of a patient physiology in the training image (402);

generate a training saliency map (420) based on the training image (402) and the predictive network (122);

compute a total loss (430) based on a first loss (432) and a second loss (434); and

update (440) the predictive network based on the total loss,

wherein the first loss (432) is based on a comparison of the predicted classification (410) and the ground truth classification (404), and

wherein the second loss (434) is based on a comparison of the training saliency map (420) and the ground truth annotation (404).

14. The system of claim 13, wherein the ground truth annotation (404) comprises a pixel-wise ground truth annotation, a bounding box, target connected component count, or a target shape feature.

**15.** A non-transitory machine-readable medium comprising a plurality of machine-executable instructions which, when executed by one or more processors, are adapted to cause the one or more processors to perform operations comprising:

receiving a medical image (602);
generating, by a trained predictive network (122), a classification (610) representative of a patient physiology in the medical image (602);
generating a saliency map (620) based on the medical image (602) and the trained predictive network (122), wherein the saliency map (620) comprises a plurality of pixels, wherein values of the plurality of pixels are indicative of a region of the medical image (602) contributing to the classification (610);
comparing features of the saliency map to a pre-determined shape constraint (630); and
when the features of the saliency map satisfy the pre-determined shape constraint (630), outputting the saliency map (620), the medical image (602), and the classification (610) to a display (166), and
when the features of the saliency map (620) do not satisfy the pre-determined shape constraint (630), preventing the saliency map (620) from being output to the display (166).

100

## Network / Cloud Computer 110

| Processor 112 | Input Device 114 | Display 116 |

Communication Interface 117

### Memory 118

#### Explainable Classification Model 120

| Predictive Network 122 | Saliency Map Generator 124 |

## Data Server 140

| Processor 142 | Input Device 144 | Display 146 |

Communication Interface 147

### Memory 148

Training Dataset 150

## User Computer 160

| Processor 162 | Memory 168 |
| Input Device 164 | Display 166 |

Communication Interface 167

## Medical Imaging Console 170

| Processor 172 | Memory 178 |
| Input Device 174 | Display 176 |

Communication Interface 177

Medical Imaging Device 180

Medical Image Report 190

Medical Images 185

**FIG. 1**

Processor Circuit 250

Processor 260

Memory 264

Instructions 266

Communication Module 268

**FIG. 2**

**FIG. 3**

400

Training dataset 150

Medical image 402

Ground truth data 404

Predictive network 122

Network layer data 415

Update parameters 440

Predicted Classification 410

Saliency map generator 124

Saliency map 420

Loss function(s) 430

First loss 432

Second loss 434

**FIG. 4**

FIG. 5

600

Predicted classification
610 and saliency map 620

| User computer 160 and/or Medical Imaging Console 170 | → | Medical image 602 | → | Predictive network 122 | → | Predicted Classification 610 | → | Display conditions 630 |

Network layer data 615

| Saliency map generator 124 | → | Saliency map 620 |

**FIG. 6**

FIG. 7

**Training Dataset 150**

**First type training data 810**

First medical image
812

First ground truth
classification 814

Ground truth
annotation 816

**Second type training data 820**

Second medical
image 822

Second ground truth
classification 824

# FIG. 8

Ground truth data 910

912 — Is tumor present: YES

914 —

905 —

FIG. 9

Threshold increasing

**FIG. 10**

Processed saliency map 1030

1035

1035

1120

Ground truth annotation 914

1110

1110

FIG. 11

Ground truth annotation 914

Processed saliency map 1030

1110

1035

1110

1210

1220

1035

1230

**FIG. 12**

EP 4 685 735 A1

Ground truth annotation 914    1020    Threshold value = 0.5    1030    Threshold value = 0.8

Ground truth connected
components: 1

Predicted connected
components: 3

Predicted connected
components: 1

**FIG. 13**

EP 4 685 735 A1

1400

Receive a training image, a ground truth classification, and a ground truth annotation **1402**

↓

Generate, by the predictive network, a predicted classification representative of a patient physiology in the training image **1404**

↓

Generate a training saliency map based on the training image and the predictive network **1406**

↓

Compute a total loss based on a first loss and a second loss **1408**

↓

Update the predictive network based on the total loss **1410**

**FIG. 14**

1500

Receive a medical image **1502**

Generate, by a trained predictive network, a classification representative of a patient physiology in the medical image **1504**

Generate a saliency map based on the medical image and the trained predictive network **1506**

Compare features of the saliency map to a pre-determined shape constraint **1508**

When the features of the saliency map satisfy the pre-determined shape constraint, output the saliency map, the medical image, and the classification to a display **1510A**

When the features of the saliency map do not satisfy the pre-determined shape constraint, prevent the saliency map from being output to the display **1510B**

**FIG. 15**

1600

**Image Classification Result**

1620

1625

1605

Is there a tumor: YES

1610

Confidence: 95%

1630

**FIG. 16**

Europäisches
Patentamt

European
Patent Office

Office européen
des brevets

# EUROPEAN SEARCH REPORT

**Application Number**

EP 24 19 0036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/174497 A1 (YOO YOUNGJIN [US] ET AL) 10 June 2021 (2021-06-10) <br> * abstract; claim 1; figures 4-5 * <br> * paragraphs [0068] - [0082] * | 1-15 | INV. <br> G06T7/00 |
| A | INAN AYSE ET AL: "Saliency Maps as an Explainable AI Method in Medical Imaging: A Case Study on Brain Tumor Classification", <br> IRISH MAHINE VISION AND IMAGE PROCESSING CONFERENCE 2023 (IMVIP2023), <br> 25 August 2023 (2023-08-25), XP093230999, <br> DOI: 10.5281/zenodo.8199333 <br> * abstract; figures 2-4 * <br> * sections 2 and 4 * | 1-15 | |
| A | DWARIKANATH MAHAPATRA: "Interpretability-Driven Sample Selection Using Self Supervised Learning For Disease Classification And Segmentation", <br> ARXIV.ORG, CORNELL UNIVERSITY LIBRARY, 201 OLIN LIBRARY CORNELL UNIVERSITY ITHACA, NY 14853, <br> 13 April 2021 (2021-04-13), XP081937557, <br> * abstract; figure 3 * <br> * section II.A * <br> * section III * | 1-15 | **TECHNICAL FIELDS SEARCHED (IPC)** <br><br> G06T |

-/--

The present search report has been drawn up for all claims

| Place of search | Date of completion of the search | Examiner |
|---|---|---|
| Munich | 9 December 2024 | Fronthaler, Hartwig |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 24 19 0036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | REYES MAURICIO ET AL: "On the Interpretability of Artificial Intelligence in Radiology: Challenges and Opportunities", RADIOLOGY: ARTIFICIAL INTELLIGENCE, vol. 2, no. 3, 1 May 2020 (2020-05-01), XP093231379, US ISSN: 2638-6100, DOI: 10.1148/ryai.2020190043 * abstract; figures 2,3,5 * * pages 4-7 * ----- | 1-15 | |
| A | MD MAHFUZUR RAHMAN ET AL: "Looking deeper into interpretable deep learning in neuroimaging: a comprehensive survey", ARXIV.ORG, CORNELL UNIVERSITY LIBRARY, 201 OLIN LIBRARY CORNELL UNIVERSITY ITHACA, NY 14853, 14 July 2023 (2023-07-14), XP091567372, * sections 6, 8, 10 and 12 * ----- | 1-15 | TECHNICAL FIELDS SEARCHED (IPC) |

The present search report has been drawn up for all claims

| Place of search | Date of completion of the search | Examiner |
|---|---|---|
| Munich | 9 December 2024 | Fronthaler, Hartwig |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 0036

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2024

| Patent document cited in search report | Publication date | Patent family member(s) | Publication date |
|---|---|---|---|
| US 2021174497 A1 | 10-06-2021 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOST TOBIAN SPRINGENBERG et al.** Striving for Simplicity: The All Convolutional Net. *arXiv: 1412.6806*, 2014

- **RAMPRASAATH R. SELVARAJU et al.** Grad-CAM.- Visual Explanations from Deep Networks via Gradient-based Localization. *arXiv:1610.02391*, 2016